# EUROPEAN PATENT APPLICATION

(11) **EP 1 962 179 A1**
(43) Date of publication of application: **27.08.2008**
(21) Application number: 07115674.9
(22) Date of filing: 04.09.2007
(51) Int. Cl.: G06F 3/12, G06F 9/44, H04N 1/60

(54) **Display system, control method of the same and control method of video source apparatus**

(30) Priority: 09.10.2006 KR 20060098160
(71) Applicant: Samsung Electronics Co., Ltd., Suwon-si Gyeonggi-do 443-742 (KR)
(72) Inventor: Cho, Cheon-yong, Gyeonggi-do (KR); Baek, Jong-hum, Gyeonggi-do (KR); Choi, Jin-wook, Gyeonggi-do (KR)
(74) Representative: Grootscholten, Johannes A.M.

(57) **Abstract**

A display system having a display part includes a user interface (UI) generator, and a controller which controls the UI generator to generate a profile adjusting window including a first menu for adjusting a display profile and a second menu for adjusting a printer profile if a control signal is input to adjust the display profile or the printer profile.

## Description

### BACKGROUND OF THE INVENTION

### Field of the Invention

Apparatuses and methods consistent with the present invention relate to a display system, a control method of the same and a control method of a video source apparatus, and more particularly, to a display system which displays a preview, a control method of the same and a control method of a video source apparatus.

### Description of the Related Art

Generally, a display apparatus and a printer have different modes to display colors. Thus, an image displayed on the display apparatus may be different from an image that is printed by the printer. For example, the display apparatus displays colors with red-green-blue (RGB) modes while the printer realizes colors with cyan-magenta-yellow-black (CMYK)modes. If the image displayed on the display apparatus is printed by an output device such as a printer, RGB color signals input from the display apparatus should be converted into CMYK color signals employed in the printer, i.e., colors should be matched between the monitor and the printer, which is called a printer profiling.

Colors and brightness of the image is adjusted according to a display profile set in the display apparatus. If the image is revised by various profiles, a user needs to acknowledge that the image applies the adjusted profile.

### SUMMARY OF THE INVENTION

Exemplary embodiments of the present invention overcome the disadvantages described above and other disadvantages not described above. Also, the present invention is not required to overcome the disadvantages described above, and an exemplary embodiment of the present invention may not overcome any of the problems described above.

The present invention provides a display system which displays an image having an adjusted profile through various previews, a control method of the same and a control method of a video source apparatus.

According to an aspect of the present invention, there is provided a display system having a display part, comprising: a user interface (UI) generator; and a controller which controls the UI generator to generate a profile adjusting window having a first menu to adjust a display profile and a second menu to adjust a printer profile if a control signal is input to adjust the display profile or the printer profile.

The display system may further comprise a storage part which stores a plurality of display profiles and printer profiles different from each other, wherein the first menu comprises a current profile item to display a current display profile and a target profile item to select one of the plurality of stored display profiles.

The second menu may comprise a target profile item to select one of the plurality of printer profiles, an illumination item to select an illumination state of a printer environment and a paper item to select a type of paper supplied to the printer.
of the present invention, If the control signal is input to adjust the display profile or the printer profile, the profile adjusting window and an image sampling window having a specified image may be displayed.

The display system may further comprise an image adjuster which adjusts a specified image according to the adjusted display profile or the adjusted printer profile, wherein the image sampling window comprises a first image which is applied with the current display profile or the printer profile, and a second image which is adjusted from the first image according to the adjusted display profile or the adjusted printer profile.

The display system may further comprise a user input part to select a predetermined image and adjust the display profile or the printer profile of the selected image, wherein the profile adjusting window further comprises a third menu to displays information on the selected image.

The information may comprise at least one of width, height, frames, and bit values of the image.

The profile adjusting window may further comprise a selection icon to select at least one of the first to third menus.

The third menu may be selectable after the first menu is selected.

The image sampling window may comprise an image rotating icon which rotates the image to 90° or 270°.

The image sampling window may further comprise an image changing icon which sequentially displays a former image or a next image with respect to the image.

According to another aspect of the present invention, there is provided a method of controlling a display system having a display part, comprising: displaying a profile adjusting window having a first menu for adjusting a display profile and a second menu for adjusting a printer profile, on the display part, if a control signal is input to adjust the display profile or the printer profile; selecting a predetermined image; adjusting the selected image according to the display profile or the printer profile if the control signal is input to adjust the display profile or the printer profile; and displaying the adjusted image.

The method may further comprise displaying the selected image and the adjusted image adjacent to each other.

The method may further comprise selecting one of the first and second menus.

The second menu may comprise a target profile item to select one of printer profiles, an illumination item to select an illumination state of a printer environment and a paper item to select a type of paper supplied to the printer, wherein the adjusting the image according to the printer profile comprises adjusting the selected image by applying the selected item, if at least one of the target profile item, the illumination item and the paper item is selected.

The profile adjusting window may further comprise a third menu which provides selection information on the selected image, the method further comprising: displaying at least one of width, height, frames and bit values of the selected image if the third menu is selected.

According to another aspect of the present invention, there is provided a method of controlling a video source apparatus, comprising: receiving a setting command of a viewing environment or a printer environment of a predetermined image; and outputting the adjusted image according to the set viewing environment or the printer environment to a specified display part.

The printer environment may comprise a target profile to select one of printer profiles, an illumination state of the printer environment and a type of paper supplied to a printer.

According to another aspect of the present invention, there is provided a display system, comprising: a video source apparatus which generates a user interface (UI) to set a viewing environment or a printer environment of a specified image, and adjusts the image according to a control signal if a control signal is input to adjust the viewing environment or the printer environment; and a display apparatus which displays the UI and the adjusted image.

### BRIEF DESCRIPTION OF THE DRAWINGS

The above and/or other aspects of the present invention will become apparent and more readily appreciated from the following description of the exemplary embodiments, taken in conjunction with the accompanied drawings of which:
FIG. 1 is a control block diagram illustrating a display system according to an exemplary embodiment of the present invention;
FIG. 2 illustrates a profile adjusting window for adjusting a display profile of the display system according to the exemplary embodiment of the present invention;
FIG. 3 illustrates the profile adjusting window for adjusting a printer profile of the display system according to the exemplary embodiment of the present invention;
FIG. 4 illustrates a profile adjusting window for displaying image information of the display system according to the exemplary embodiment of the present invention;
FIG. 5 is a flowchart illustrating a control method for the display system according to the embodiment of the present invention; and
FIG. 6 is a control block diagram illustrating a display system according to another exemplary embodiment of the present invention.

### DETAILED DESCRIPTION OF EXEMPLARY EMBODIMENTS

Hereinafter, exemplary embodiments of the present invention will be described with reference to accompanying drawings, wherein like numerals refer to like elements and repetitive descriptions will be avoided as necessary.

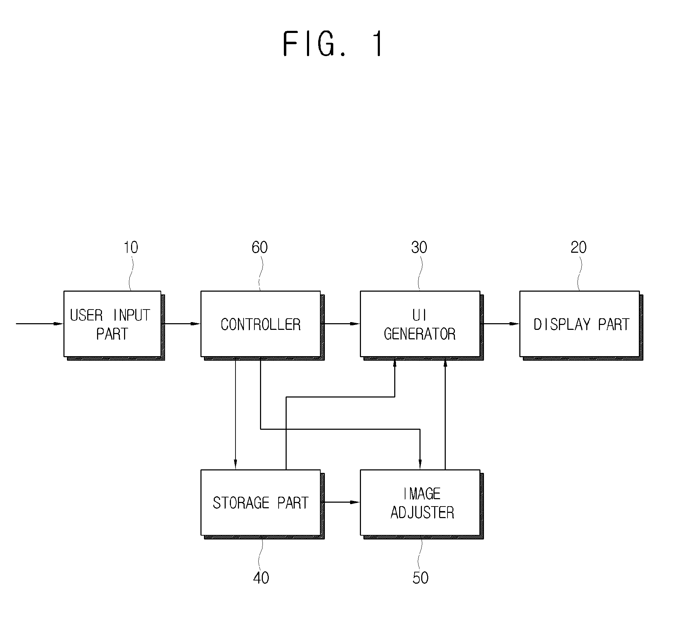

FIG. 1 is a control block diagram illustrating a display system according to an exemplary embodiment of the present invention. As shown therein, a display system according to the exemplary embodiment of the present invention comprises a user input part 10, a display part 20, a user interface (UI) generator 30, a storage part 40, an image adjuster 50 and a controller 60 which controls the foregoing elements. The display system according to the exemplary embodiment of the present invention may comprise a computer main body (not shown) which has a graphic card providing an image source and a display apparatus (not shown) which is connected with the computer main body. The display system according to the exemplary embodiment of the present invention may further comprise a printer as an image output device to output an image. The display part 20 may be included in the display apparatus. Other elements may be included in the computer main body, but are not limited thereto. The display apparatus having an image source, for example, but not limited to, a graphic card, is referred as a display system.

The user input part 10 outputs various control signals to set and adjust a display profile adjusting a state of an image displayed on the display part 20, or a printer profile adjusting an output image.

The display profile may be referred as a monitor profile, which adjusts or changes various conditions for an image displayed on the display part 20. A color temperature, a gamma value and color coordinate of the image is adjusted with the display profile. Thus, the image may vary according to the display profile when being displayed on the display part 20.

When the image displayed on the display part 20 is output to the printer, a color mode needs to be changed since a color mode (RGB mode) by which the display part 20 displays colors, is different from a color mode (CMTK) used in the printer. The printer profile refers to an adjustment of colors displayed by the display part 20 according to various conditions such as a type of the printer, printing paper and resolution.

Thus, world leaders in the color industry have defined an international color consortium (ICC) profile which provides descriptions on color properties of color devices such as a scanner, a printer and a display apparatus by data file texts including a setting value in numerical data for a color value to be changed. The color devices adjust colors according to information of the ICC profile. The color adjustment by the ICC profile is known, and a detail thereof will not be explained here.

The user input part 10 may comprise an additional hot key to adjust the display profile or the printer profile. The user input part 10 may comprise a remote controller which communicates with the display system remotely. The user input part 10 may comprise, but is not limited to, a keyboard, a mouse or a touch pad which is connected with the image source that is connected with the display system.

The display part 20 displays a profile adjusting window which provides adjustments for an image, the display profile or the printer profile that is selected by a user. The display part 20 may comprise, but is not limited to, a cathode ray tube (CRT), a liquid crystal display panel having liquid crystals, an organic light emitting diode (OLED) having an organic light emitting element or a plasma display panel (PDP).

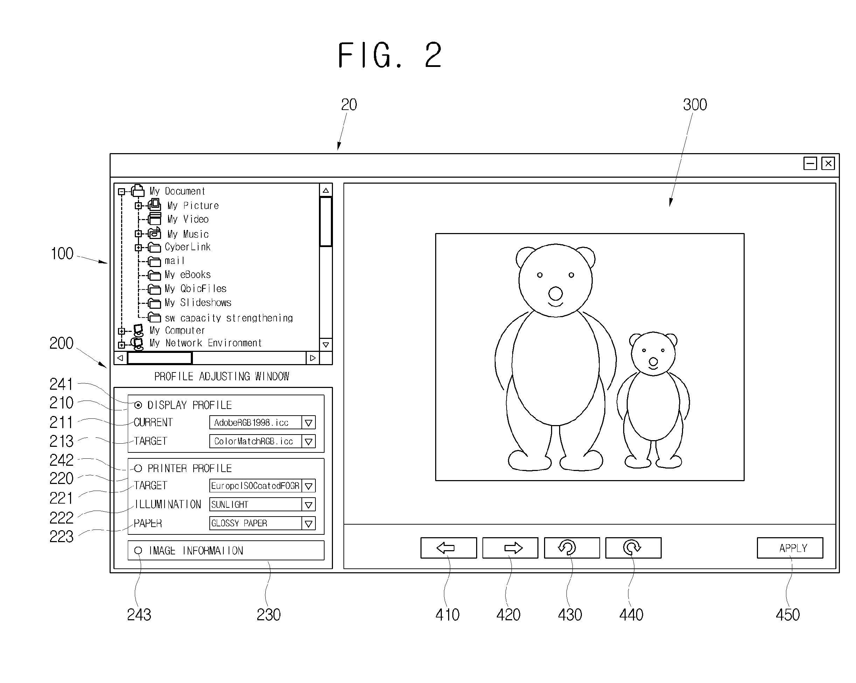

The UI generator 30 generates the profile adjusting window (refer to FIGS. 2 to 4) to adjust the profile by a control of the user input part 10, the storage part 40 and the controller 60, and displays the profile adjusting window on the display part 20. The UI generator 30 generates an image sampling window having images before and after a target profile is employed. The profile adjusting window or the image sampling window generated by the UI generator 30 will be described later. The shape and configuration of those windows are not limited to the description explained later.

The storage part 40 stores a plurality of the display profiles and the printer profiles which are different from each other. The display system according to the exemplary embodiment of the present invention provides an interface with which a user previews an image with various profiles by applying the profiles to the image. The exemplary embodiment of the present invention stores information on the profiles in the storage part 40. The display profile and the printer profile may be a known profile or a designed profile by a user. That is, the storage part 40 stores the plurality of profiles to adjust the color state of the image. The image is adjusted by the profile that is selected through the profile adjusting window.

The image adjuster 50 adjusts the image according to the display profile or the printer profile that is selected by a user. To adjust the image according to the printer profile, the image adjuster 50 comprises a color matching part which adjusts a color mode of the image according to the selected profile.

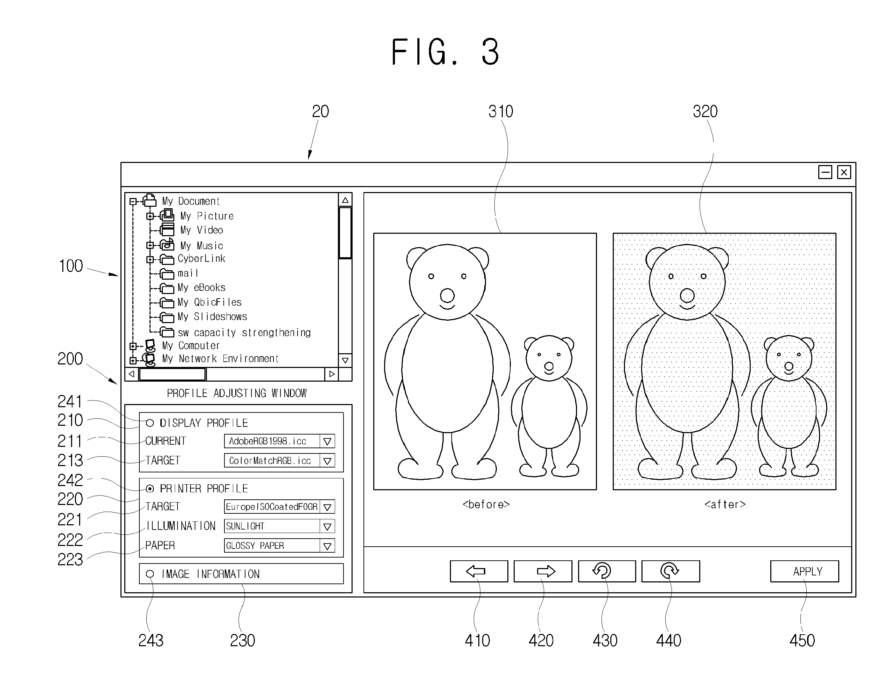

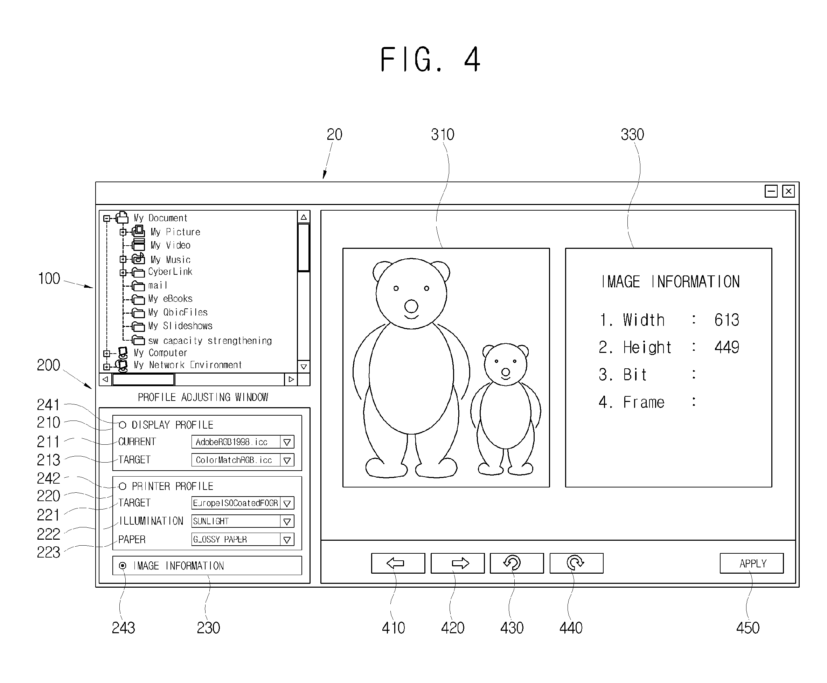

The controller 60 controls the UI generator 30 by the control signal from the user input part 10 to generate the profile adjusting window and the image sampling window, and displays the windows on the display part 20. FIG. 2 illustrates the profile adjusting window for adjusting the display profile of the display system according to the exemplary embodiment of the present invention. FIG. 3 illustrates the profile adjusting window for adjusting the printer profile of the display system according to the exemplary embodiment of the present invention. FIG. 4 illustrates the profile adjusting window for displaying image information of the display system according to the exemplary embodiment of the present invention. The UI that is displayed on the display part 20 will be described with reference to FIGS. 2 to 4.

As illustrated in FIG. 2, the display part 20 is divided into three parts comprising a window disposed in each part. The three windows comprise an image viewing window 100, a profile adjusting window 200 and an image sampling window 300.

The image viewing window 100 refers to a display window displaying a path to a stored image file. The image viewing window 100 is used to search a sample image to apply the profile therewith. A user may select one sample image from a folder storing a plurality of images.

The profile adjusting window 200 comprises a first menu 210 for adjusting the display profile, a second menu 220 for adjusting the printer profile, a third menu 230 for displaying the image information and selection icons 241, 242 and 243 to select the first to third menus 210, 220 and 230. The selection icons 241, 242 and 243 are included in the respective menus 210, 220 and 230.

The first menu 210 comprises a current profile item 211 displaying a current display profile and a target profile item 213 to select one of the plurality of stored display profiles. The current profile item 211 and the target profile item 213 comprise a scroll bar respectively. A user may select one of the plurality of profiles through the user input part 10. If a sample image is selected to illustrate the adjustment of the profile, the image sampling window 300 displays the selected image in a large size. If a sample image is not selected, an image that is listed among the stored images in the folder, may be selected. Otherwise, a certain image may be set as a default image.

If a display profile is selected from the target profile item 213, the selected sample image is adjusted to an image applied with the selected display profile. That is, a user may check the adjusted image through a preview function, which helps to set the display profile. Hereinafter, an image before adjusting the profile refers to a first image 310, and an image after applying the profile refers to a second image 320.

If the folder stores a plurality of images, the image sampling window 300 may further comprise a viewer item (not shown) which simplifies, specifies, enlarges and reduces the images.

If the selection icon 241 of the first menu 210 is selected, the selection icon 242 of the second menu 220 is deactivated, thereby displaying the display profile of the current sample image on the current display profile item 211. That is, the first and second menus 210 and 220 are independently activated. Here, the two profiles may not be adjusted simultaneously. If one of the plurality of display profiles is selected through the target profile item 213, the first image is adjusted to the second image by the image adjuster 50.

The image sampling window 300 comprises image changing icons 410 and 420 to sequentially display the image before and after applying the selected profile and image rotating icons 430 and 440 to rotate the image to 90° or 270° when the sample image applying the selected profile is displayed. A user may apply a target display profile in the target profile items 213 to various sample images through the icons 410 to 440. An apply icon 450 is disposed in the image sampling window 300. If the target display profile is selected through the second image, a user may apply the target display profile to the overall image through the apply icon 450.

FIG. 3 illustrates the selection of the second menu 220 from the profile adjusting window 200. The first and second images 310 and 320 are formed side by side if the second menu 220 is selected. The second menu 220 comprises the target profile item 221 to select one of the plurality of stored printer profiles, an illumination item 222 to select an illumination state of the printer environment and the paper item 223 to select the type of paper supplied to the printer.

Items 221, 222, 231 comprise a scroll bar, respectively. The second menu 220 comprises more items than the first menu 210 to display real colors to be output. The illumination item 222 is used to select the illumination state, for example, but not limited to, sunlight, a fluorescent lamp and an incandescent lamp of the printer environment. The paper item 223 comprises items, for example, but not limited to, glossy, matte and semi-glossy to select the state of the paper supplied to the printer.

If the illumination item 222 or the paper item 223 is not selected, the image is adjusted according to a default value. A user may typically set the default value according to the illumination state of a place where the printer is disposed, or the type of the paper supplied to the printer.

The first and second images 310 and 320 may be simultaneously displayed on the image sampling window 300 when the first menu 210 is selected. If the target profile is adjusted, the first image 310 may be an initial image or an image that is adjusted most recently.

FIG. 4 illustrates the selection of the image information 330 of the sample image by the third menu 230. The third menu 230 may be selected after the first menu is selected first, but not limited thereto. Alternatively, the third menu 230 may be selected after the second menu 220 is selected, or may be independently selected regardless of the first and second menus 210 and 220. The image information may comprise at least one of width, height, frames, and bit values of the selected sample image.

The third menu 230 is not a compulsory item in any exemplary embodiment of the present invention and may be removed according to a user's preference.

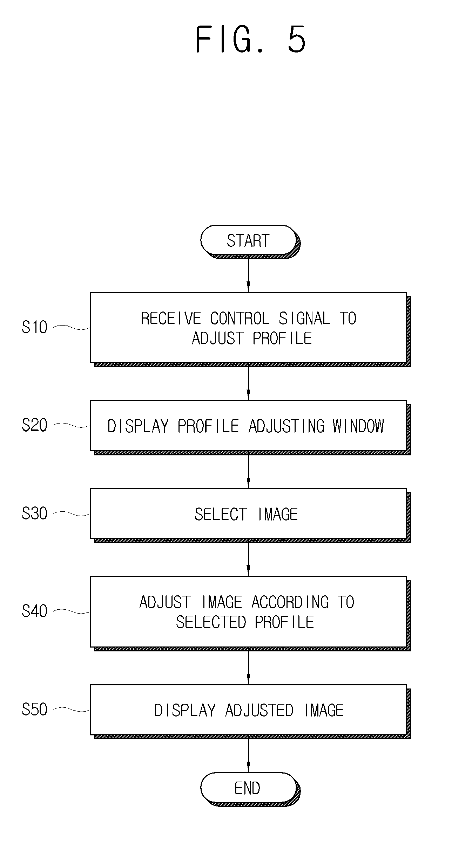

FIG. 5 illustrates a control method of the display system according to the exemplary embodiment of the present invention. The control method of the display system will be described with reference to FIG. 5.

If the control signal is received to adjust the display profile or the printer profile (S10), the controller 60 controls the UI generator 30 to generate the profile adjusting window 200 and displays the window (S20). The profile adjusting window 200 comprises the first menu 210 to adjust the display profile, the second menu 220 to adjust the printer profile and the third menu 230 to display the image information.

The sample image is selected (S30), and the image is adjusted according to the control signal to select one of the display profile and the printer profile (S40).

The display profile and the printer profile according to the exemplary embodiment of the present invention may not be simultaneously adjusted. One of the first and second menus 210 and 220 is selected first to choose the target profile.

After the profile adjusting window 200 is selected, a sample image may be chosen. Alternatively, the sample image may be first selected before displaying the profile adjusting window 200. That is, the operation S30 may be precede operations S10 and S20.

The adjusted image is displayed (S50) and a user may confirm the final profile after previewing the adjusted image.

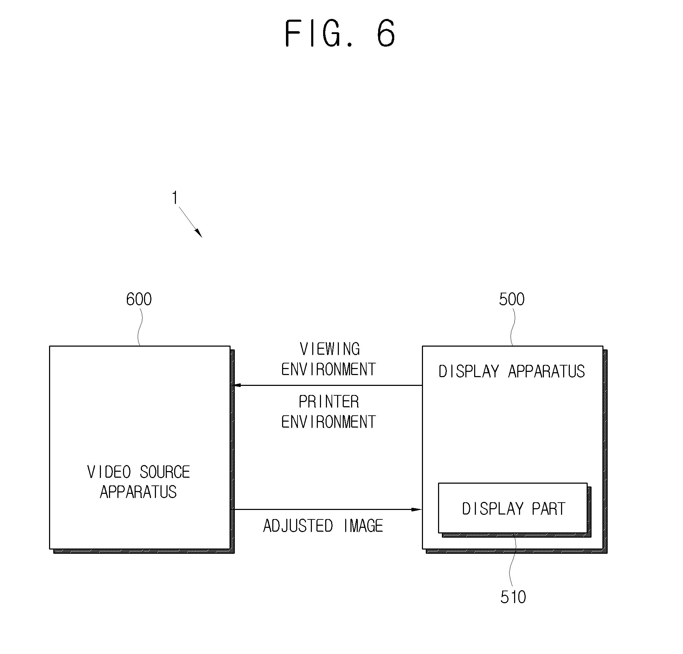

FIG. 6 is a control block diagram of a display system according to another exemplary embodiment of the present invention. A display system 1 comprises a video source apparatus 600 and a display apparatus 500. The display apparatus 500 comprises a display part 510.

The video source apparatus 600 generates a UI to set a viewing environment of a predetermined image, i.e., a display profile or a printer environment, and adjusts the image according to an input control signal to adjust the viewing environment or the printer environment. The video source apparatus 600 may comprise various devices, for example, but not limited to, a computer, a camera and a scanner. The video source apparatus 600 comprises an application program to generate a UI. That is, the video source apparatus 600 generates the UI after receiving the external control signal to generate the UI, and outputs the UI to the display apparatus 500. The video source apparatus 600 adjusts the image according to the selected viewing environment or the printer environment and outputs the image to the display apparatus 500.

The display apparatus 500 displays the UI generated by the video source apparatus 600 and the image adjusted by the video source apparatus 600 on the display part 510. The UI and the adjusted image may be displayed on the display part 510 with various designs and types. The UI and the adjusted image may be designed like the profile adjusting window and the image sampling window shown in FIGS. 2 to 4.

The exemplary embodiments of the present invention of simultaneously displaying the UI for adjusting the display profile and the printer profile may reduce redundancy in adjusting the profile. The exemplary embodiments of the present invention also may provide various previews through the UI having various items.

As described above, the exemplary embodiments of the present invention provide a display system which displays an image having an adjusted profile through various previews, a control method of the same and a control method of a video source apparatus.

Although a few non-limiting exemplary embodiments of the present invention have been shown and described, it will be appreciated by those skilled in the art that changes may be made in these exemplary embodiments without departing from the principles and spirit of the invention, the scope of which is defined in the appended claims and their equivalents.

## Claims

1. A display system having a display part, the display system comprising:
a user interface (UI) generator; and
a controller which controls the UI generator to generate a profile adjusting window comprising a first menu for adjusting a display profile and a second menu for adjusting a printer profile if a control signal is input to adjust the display profile or the printer profile.

2. The display system according to claim 1, further comprising a storage part which stores a plurality of display profiles and printer profiles different from each other,
wherein the first menu comprises a current profile item for displaying a current display profile, and
a target profile item for selecting one of the plurality of stored display profiles.

3. The display system according to claim 2, wherein the second menu comprises a target profile item for selecting one of the plurality of printer profiles, an illumination item for selecting an illumination state of a printer environment and a paper item for selecting a type of paper supplied to the printer.

4. The display system according to claim 3, wherein if the control signal is input to adjust the display profile or the printer profile, the profile adjusting window and an image sampling window having a specified image are displayed.

5. The display system according to claim 4, further comprising an image adjuster which adjusts a specified image according to the adjusted display profile or the adjusted printer profile,
wherein the image sampling window comprises a first image which is applied with the current display profile or the printer profile, and a second image which is adjusted from the first image according to the adjusted display profile or the adjusted printer profile.

6. The display system according to claim 1, further comprising a user input part which is configured to select a specified image and adjust the display profile or the printer profile of the selected image,
wherein the profile adjusting window further comprises a third menu for displaying information relating to the selected image.

7. The display system according to claim 6, wherein the information comprises at least one of width, height, frames, and bit values of the image.

8. The display system according to claim 6, wherein the profile adjusting window further comprises a selection icon for selecting at least one of the first to third menus.

9. The display system according to claim 8, wherein the third menu is selectable after the first menu is selected.

10. The display system according to claim 4, wherein the image sampling window comprises an image rotating icon which rotates the image to 90° or 270°.

11. The display system according to claim 4, wherein the image sampling window further comprises an image changing icon for sequentially displaying a former image or a next image with respect to the image.

12. A method of controlling a display system having a display part, the method comprising:
displaying a profile adjusting window having a first menu to for adjusting a display profile and a second menu to for adjusting a printer profile, on the display part, if a control signal is input to adjust the display profile or the printer profile;
selecting a specified image;
adjusting the selected image according to the display profile or the printer profile if the control signal is input to adjust the display profile or the printer profile; and
displaying the adjusted image.

13. The method according to claim 12, further comprising displaying the selected image and the adjusted image adjacent to each other.

14. The method according to claim 12, further comprising selecting one of the first and second menus.

15. The method according to claim 14, wherein the second menu comprises a target profile item for selecting one of printer profiles, an illumination item for selecting an illumination state of a printer environment and a paper item for selecting a type of paper supplied to the printer, wherein
the adjusting the image according to the printer profile comprises adjusting the selected image by applying the selected item, if at least one of the target profile item, the illumination item and the paper item is selected.

16. The method according to claim 12, wherein the profile adjusting window further comprises a third menu for selecting information related to the selected image, the method further comprising displaying at least one of width, height, frames and bit values of the selected image if the third menu is selected.

17. A method of controlling a video source apparatus, the method comprising:
receiving a setting command of a viewing environment or a printer environment of a specified image; and
outputting the adjusted image according to the set viewing environment or the printer environment to a specified display part.

18. The method according to claim 17, wherein the printer environment comprises a target profile for selecting one of printer profiles, an illumination state of the printer environment and a type of paper supplied to a printer.

19. A display system comprising:
a video source apparatus which generates a user interface (UI) for setting a viewing environment or a printer environment of a specified image, and adjusts the image according to a control signal if a control signal is input to adjust the viewing environment or the printer environment; and
a display apparatus which displays the UI and the adjusted image.
